# EUROPÄISCHE PATENTSCHRIFT

(11) **EP 2 335 128 B1**
(45) Veröffentlichungstag und Bekanntmachung des Hinweises auf die Patenterteilung: **06.08.2014**
(21) Anmeldenummer: 09783989.8
(22) Anmeldetag: 13.10.2009
(51) Int. Cl.: F25D 29/00, G05D 23/19

(54) **KÜHL- UND/ODER GEFRIERGERÄT SOWIE VERFAHREN ZUR REGELUNG EINES SOLCHEN KÜHL- UND/ODER GEFRIERGERÄTES**
COOLER AND/OR FREEZER AND METHOD FOR CONTROLLING A COOLER AND/OR FREEZER
APPAREIL DE RÉFRIGÉRATION ET/OU DE CONGÉLATION ET PROCÉDÉ DE RÉGULATION D'UN TEL APPAREIL DE RÉFRIGÉRATION ET/OU DE CONGÉLATION

(30) Priorität: 16.10.2008 DE 102008042909
(43) Veröffentlichungstag der Anmeldung: 22.06.2011
(73) Patentinhaber: BSH Bosch und Siemens Hausgeräte GmbH, 81739 München (DE)
(72) Erfinder: KONOPA, Helmut, 89340 Leipheim (DE); LIPP, Walter, 89437 Haunsheim (DE); NUIDING, Wolfgang, 89537 Giengen (DE)
(86) Internationale Anmeldenummer: PCT/EP2009/063363
(87) Internationale Veröffentlichungsnummer: WO 2010/043627

(56) Entgegenhaltungen:
- EP-A- 0 288 967
- DE-A1- 1 915 594
- DE-A1- 2 831 476
- DE-A1- 4 210 090
- DE-B1- 1 551 371
- GB-A- 2 180 962

## Beschreibung

Die Erfindung betrifft ein Kühl- und/oder Gefriergerät mit einem Kühlfach gemäß dem Oberbegriff des Patentanspruches 1.

Die Temperaturregelung eines solches Kühlfaches erfolgt im einfachsten Fall über einen Kühlfachsensor, der an geeigneter Stelle im Kühlfach angeordnet ist und der einen im Kältemittelkreislauf angeordneten Verdichter zu- bzw. abschaltet. Die Temperatur im Kühlfach wird dabei oberhalb des Gefrierpunktes, etwa auf 4° bis 6°C geregelt.

Ein gattungsgemäßes Kühl- und/oder Gefriergerät weist eine Steuereinrichtung zur Regelung einer Ist-Temperatur im Kühlfach auf. Diese wird bei geschlossener Gerätetür im Normalbetrieb auf einen ersten Solltemperaturbereich zwischen einem oberen und einem unteren Temperaturschwellwert geregelt.

Bei einer Wareneinbringung in das Kühlfach ist eine lange Zeitdauer für die Abkühlung der eingebrachten Ware erforderlich, was insbesondere bei frischer Ware zu Qualitätsbeeinträchtigungen führen kann.

Aus der DE 1 551 371 B ist ein Verfahren zur Temperaturregelung in einer Tiefkühltruhe beschrieben, bei der die Gefriertemperatur auf einen Solltemperaturbereich zwischen -18°C und -19°C geregelt wird. Bei einer Wareneinbringung wird ein Ansprechwert der Temperaturregelung selbsttätig auf eine tiefere Gefriertemperatur verlagert. Aus der DE 1 915 594 A ist ein Gefriergerät bekannt, das eine Schnellgefriereinrichtung aufweist, die bei Aktivierung der Gefriertemperatur auf -25°C regelt. Die Schnellgefriereinrichtung wird aktiviert, wenn das Gefriergerät längere Zeit geöffnet ist und eine größere Menge an Frischgut in das Gefriergerät eingebracht wird. Aus der EP 0 288 967 A1 ist ebenfalls ein Gefriergerät mit einer solchen Schnellgefriereinrichtung bekannt, die die Gefriertemperature in einem Schnellgefrierbetrieb von einer normalen Gefriertemperatur, beispielsweise -19°C, weiter reduziert.

Die DE 42 10 090 A1 offenbart einen Kühlschrank mit einem Tiefkühlabteil, der eine Steuereinrichtung, einen Kältemittelkreislauf mit einem Verdichter und Mittel zum Zählen der Anzahl von Türöffnungsvorgängen aufweist. Aufgrund einer Türöffnungs- oder Türschließfrequenz wird eine Unterkühlung des Tiefkühlabteils durchgeführt.

Die Aufgabe der Erfindung besteht darin, ein Kühl- und/oder Gefriergerät bereitzustellen, bei dem nach Wareneinbringung in das Kühlfach eine beschleunigte Abkühlung der eingebrachten Ware erfolgt.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patenanspruches 1 ist der untere Temperaturschwellwert bei Vorliegen eines das Einbringen von Kühlgut in das Kühlfach anzeigenden Wareneinbringungssignales für eine vorbestimmte Zeitdauer abgesenkt. Beim Vorliegen des Wareneinbringungssignals schaltet die Regeleinrichtung daher von einem ersten Solltemperaturbereich auf einen zweiten Solltemperaturbereich mit reduziertem unteren Temperaturschwellwert um. Die Regeleinrichtung regelt somit die Ist-Temperatur nach erfolgter Wareneinbringung auf einen unteren Temperaturwert, der näher am Gefrierpunkt liegt. Auf diese Weise wird nach erfolgter Wareneinbringung die in das Kühlfach eingeführte Kühlleistung gesteigert.

Für eine hohe Regelgüte ist es von Vorteil, wenn nach erfolgter Wareneinbringung die Ist-Temperatur in kurzer Zeit auf ein niedrigeres Temperaturniveau einschwingt. Dies kann bevorzugt dadurch erreicht werden, dass der obere Temperaturschwellwert nach Wareneinbringung konstant bleibt, d. h. weder ansteigt noch abfällt.

Der Regeleinrichtung ist eine Signal-Erzeugungseinrichtung zugeordnet sein, die bei Eintritt unterschiedlicher Ereignisse das oben erwähnte Wareneinbringungssignal erzeugen kann. Beispielhaft kann die Signal-Erzeugungseinrichtung ein manuell betätigbares Bedienelement aufweisen, mit dessen Betätigung das Wareneinbringungssignal erzeugbar ist. Zusätzlich oder alternativ hierzu kann die Signal-Erzeugungseinrichtung einen Türöffnungssensor aufweisen, mittels dem Öffnen einer Gerätetür das Wareneinbringungssignal erzeugbar ist. Außerdem kann die Signal-Erzeugungseinrichtung zumindest einen Überwachungssensor aufweisen, der einen Regelparameter bzw. einen Kreislaufparameter des Kältemittelkreislaufes überwacht und bei Überschreiten eines Grenzwertes das Wareneinbringungssignal erzeugt.

Als Regel- bzw. Kreislaufparameter können beispielhaft die Laufzeit eines im Kältemittelkreislauf angeordneten Verdichters oder dessen Leistungsaufnahme überwacht werden. Alternativ kann als Regel- oder Kreislaufparameter die Temperatur des Kühlfaches oder eine von einem Verdampfersensor erfasste Verdampfertemperatur dienen. Messtechnisch bevorzugt ist es jedoch, wenn der Überwachungssensor als Kältemittelkreislauf-Parameter die Verdichter-Laufzeiten überwacht. Bei Überschreiten einer vorgegebenen Grenzinterwalllänge kann dann die Signal-Erzeugungseinrichtung das Wareneinbringungssignal erzeugen.

Für eine betriebssichere Erfassung der Wareneinbringung in das Kühlfach kann die Regeleinrichtung eine Wareneinbringung in das Kühlfach auf zumindest zwei unterschiedliche Arten detektieren, etwa mittels des oben erwähnten Bedienelementes in Kombination mit dem Türöffnungssensor. Besonders bevorzugt kann die Signal-Erzeugungseinrichtung in Kombination das Bedienelement, den Überwachungssensor sowie den Türöffnungssensor aufweisen.

Das Kühl- und/oder Gefriergerät kann in bekannter Weise einen Kältemittefkreislauf mit darin vorgesehenem Verdichter, Verflüssiger und Verdampfer aufweisen. Der Verdichter kann von der Regeleinrichtung als Stellglied angesteuert werden, um die in das Kühlfach einzubringende Kühlleistung zu erhöhen. Bei der Temperaturregelung schaltet die Regeleinrichtung den Verdichter ein, wenn die Ist-Temperatur den oberen Temperaturschwellwert des Solltemperaturbereiches überschreitet. Der Verdichter wird demgegenüber ausgeschaltet, wenn die Ist-Temperatur den unteren Temperaturschwellwert unterschreitet. Der untere Temperaturschwellwert kann dabei einer, vom Benutzer eingestellten Kühltemperatur entsprechen.

Zur Erfassung der Ist-Temperatur kann die Regeleinrichtung einen Kühlfachsensor aufweisen. Dieser ist an geeigneter Stelle im Kühlfach vorgesehen sein und die Kühlfachtemperatur als eine Ist-Temperatur erfassen.

Zusätzlich kann der Regeleinrichtung ein Verdampfersensor zugeordnet sein, der eine Verdampfertemperatur erfasst. Auf der Grundlage der erfassten Kühlfach- und Verdampfertemperaturen kann die Steuereinrichtung den Verdichter ansteuert. Hierzu kann die Regeleinrichtung das Einschalten des Verdichters erst ab einer vorgegebenen, vom Verdampfersensor erfassten Verdampfertemperatur freigeben, bei der ein sicheres Abtauen des Verdampfers gewährleistet ist.

Nachfolgend sind zwei Ausführungsbeispiele der Erfindung anhand der beiliegenden Figuren beschrieben.

Es zeigen:
- Fig. 1: in einer schematischen Prinzipdarstellung ein Kühl- und/oder Gefriergerät mit einem Kühlfach;
- Fig. 2: gemäß dem ersten Ausführungsbeispiel ein Temperatur-Zeit-Diagramm, dass den zeitlichen Verlauf einer Kühlfachtemperatur bei einer Wareneinbringung zeigt, sowie ein Diagramm, das die Betriebszustände des Verdichters zeigt; und
- Fig. 3: gemäß dem zweiten Ausführungsbeispiel ein Temperatur-Zeit-Diagramm entsprechend der Fig. 2.

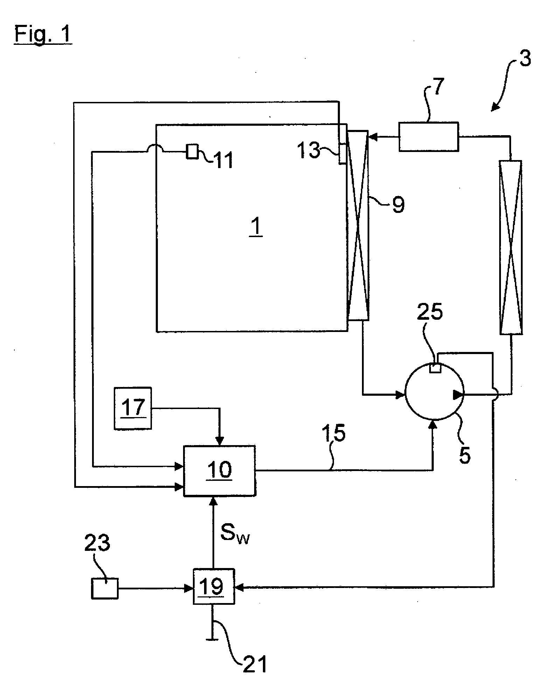

In der Fig. 1 ist grob schematisch ein Kühlgerät mit einem Kühlfach bzw. Kühlraum 1 gezeigt, der mittels einer nicht dargestellten Gerätetür schließbar ist. Der Kühlraum 1 wird in bekannter Weise mittels eines Kältemittelkreislaufes 3 gekühlt, in welchem unter anderem ein Verdichter 5, ein Verflüssiger, ein Expansionselement 7 sowie ein Verdampfer 9 geschaltet sind. Der Verdampfer 9 ist mit einer, den Kühlraum 1 begrenzenden Seitenfläche thermisch gekoppelt.

Zur Regelung einer Kühlraumtemperatur ist eine Steuereinrichtung 10 vorgesehen. Der Steuereinrichtung 10 ist ein innerhalb des Kühlraumes 1 angeordneter Raumsensor 11 und ein Verdampfersensor 13 zugeordnet sind, der auf der mit dem Verdampfer 9 thermisch gekoppelten Seitenfläche angeordnet ist. Die Steuereinrichtung 10 kann über eine Signalleitung 15 den Verdichter 5 zu- bzw. abschalten und somit die über den Verdampfer 9 in den Kühlraum eingebrachte Kühlleistung steuern. Der Steuereinrichtung 10 ist außerdem ein Eingabemittel 17 zugeordnet, über das ein Benutzer eine Kühlraumtemperatur einstellen kann, die in einem Bereich oberhalb des Gefrierpunktes liegt.

Wie aus der Fig. 1 weiter hervorgeht, ist die Steuereinrichtung 10 signaltechnisch mit einer Signal-Erzeugungseinrichtung 19 in Verbindung. Bei einer Wareneinbringung in den Kühlraum 1 wird in der Signal-Erzeugungseinrichtung 19 ein Wareneinbringungssignal S_{W} erzeugt und an die Steuereinrichtung 10 geleitet. Die Steuereinrichtung 10 erhöht in Antwort auf das Wareinbringungssignal S_{W} die in den Kühlraum 1 einzubringende Kühlleistung, wodurch sich die Abkühlzeit der neu in den Kühlraum 1 eingebrachten Waren reduziert.

Gemäß dem ersten Ausführungsbeispiel weist die Signal-Erzeugungseinrichtung 19 zur Erfassung einer Wareneinbringung ein manuell betätigbares Bedienelement 21 auf. Das Bedienelement 21 kann während oder nach einer Wareneinbringung in den Kühlraum 1 durch den Benutzer betätigt werden, wodurch das Wareneinbringungssignal S_{W} zur Steuereinrichtung 10 geleitet wird.

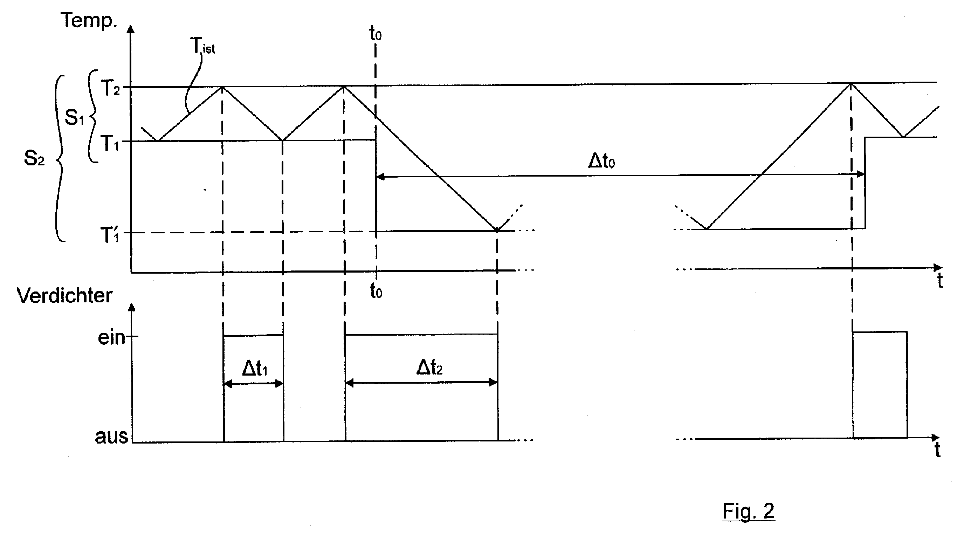

Die Erhöhung der Kühlleistung durch die Steuereinrichtung 10 ist gemäß dem ersten Ausführungsbeispiel in der Fig. 2 veranschaulicht. In dem Temperatur-Zeit-Diagramm der Fig. 2 wird zum Zeitpunkt t₀ das Wareneinbringungssignal S_{W}, etwa durch Betätigung des Bedienelements 21, erzeugt. In einem Zeitraum vor dem Zeitpunkt t₀ regelt die Steuereinrichtung 10 in einem Normalbetrieb. Im Normalbetrieb wird mittels des Kühlraumsensors 11 die Kühlraumtemperatur als Ist-Temperatur Tᵢₛₜ erfasst und an die Steuereinrichtung 10 geleitet. Die Ist-Temperatur Tᵢₛₜ wird in der Fig. 2 in einem ersten Solltemperaturbereich S₁ zwischen einem oberen und einem unteren Temperaturschwellwert T₁, T₂ geregelt. Im vorliegenden Ausführungsbeispiel liegt der erste Solltemperaturbereich S₁ zwischen 4° und 6°. Der untere Temperaturschwellwert T₁ entspricht dabei - ggf. mittels eines Offset-Wertes angepasst - einem über das Eingabemittel 17 eingegebenen Temperaturwert.

Sobald die Ist-Temperatur Tᵢₛₜ den oberen Temperaturschwellwert T₂ überschreitet, schaltet die Steuereinrichtung 10 den Verdichter 5 ein. Unterschreitet die Ist-Temperatur Tᵢₛₜ den unteren Temperaturschwellwert T₁, so wird der Verdichter 5 ausgeschaltet. Die Steuereinrichtung 10 gibt dabei das Einschalten des Verdichters 5 erst ab einer vorgegebenen, vom Verdampfersensor 13 erfassten Verdampfertemperatur frei, bei der ein Abtauen des Verdampfers 9 bei ausgeschaltetem Verdichter 5 gewährleistet ist.

Nach Erzeugung des Wareneinbringungssignals S_{W} schaltet die Steuereinrichtung 10 vom ersten Solltemperaturbereich S₁ auf den zweiten Solltemperaturbereich S₂ um. Im zweiten Solltemperaturbereich S₂ bleibt der obere Temperaturschwellwert T₂ unverändert, während der untere Temperaturschwellwert T₁ auf beispielhaft 1°C abgesenkt wird. Wie in der Fig. 2 gezeigt, ist zur Absenkung der Ist-Temperatur auf den reduzierten Temperaturschwellwert T₁ die Laufzeit des Verdichters 5 von Δt1 auf Δt₂ zu erhöhen. Die Verdichter-Laufzeit Δt2 des Verdichters 5 endet, nachdem die Ist-Temperatur Tᵢₛₜ den unteren Temperaturschwellwert T₁ des zweiten Solltemperaturbereiches S₂ erreicht hat. Die Regelung der Ist-Temperatur Tᵢₛₜ auf den zweiten Solltemperaturbereich S₂ erfolgt über eine vorgebbare Zeitdauer Δt₀. Nach dem Ablauf dieser Zeitdauer Δt₀ schaltet die Steuereinrichtung 10 wieder in den Normalbetrieb, zur Regelung der Ist-Temperatur Tᵢₛₜ auf den ersten Solltemperaturbereich S₁.

Zusätzlich oder alternativ zum Bedienelement 21 kann die Signal-Erzeugungseinrichtung 19 einen Türöffnungsschalter 23 aufweisen, der das Öffnen der Gerätetür unmittelbar erfassen kann. Alternativ und/oder zusätzlich kann die Signal-Erzeugungseinrichtung 19 auch einen Überwachungssensor 25 aufweisen, der beispielhaft die Verdichter-Laufzeitintervalle Δt₁, Δt₂ überwacht.

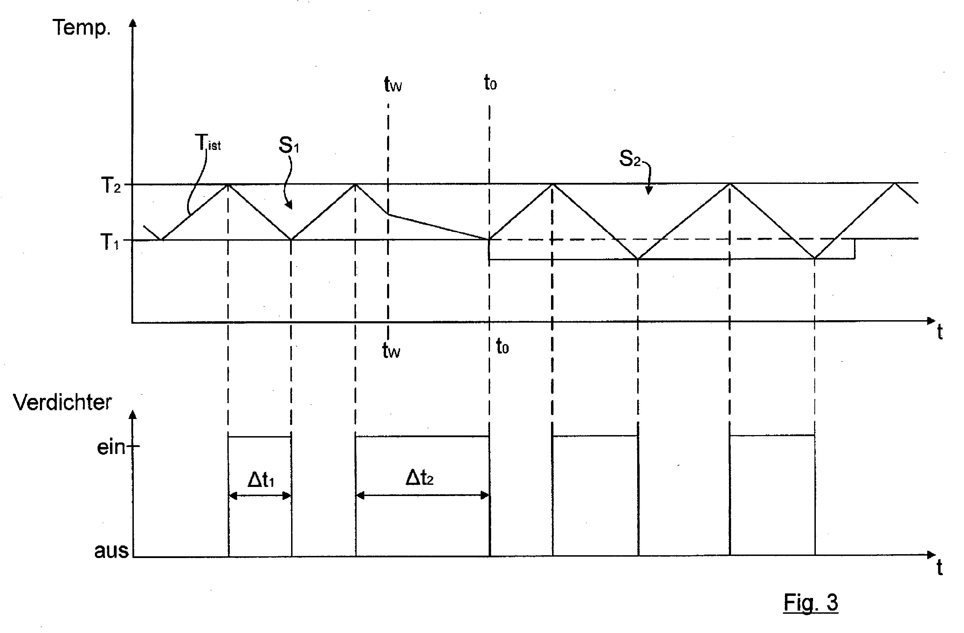

Anhand der Fig. 3 ist der Fall, dass das Umschalten der Steuereinrichtung 10 vom ersten auf den zweiten Solltemperaturbereich S₂ mittels des Überwachungssensors 25 erfolgt. Gemäß der Fig. 3 wird bis zum Zeitpunkt t_{W} eine Temperaturregelung im Normalbetrieb, durchgeführt, bei der die Ist-Temperatur Tᵢₛₜ im ersten Solltemperaturbereich S₁ zwischen den oberen und unteren Temperaturschwellwerten T₁, T₂ geregelt wird. Zum Zeitpunkt t_{W} wird die Gerätetür für eine Wareneinbringung geöffnet, wodurch der Verdichter 5 eine entsprechend verlängerte Laufzeit Δt₂ benötigt, um die Ist-Temperatur Tᵢₛₜ auf den unteren Schwellwert T₁ zu reduzieren. Das Laufzeitintervall Δt₂ wird vom Überwachungssensor 25 erfasst und in der Signal-Erzeugungseinrichtung 19 mit einer vorgegebenen Grenzintervalllänge verglichen. In der Fig. 3 überschreitet die erfasste Laufzeit Δt₂ die Grenzintervalllänge, so dass die Signal-Erzeugungseinrichtung 19 zum Zeitpunkt t₀ das Wareneinbringungssignal S_{W} erzeugt.

Wie bereits anhand der Fig. 2 erläutert, schaltet nach Erzeugung des Wareneinbringungssignales S_{W} zum Zeitpunkt t₀ die Steuereinrichtung 10 vom ersten Solltemperaturbereich S₁ auf den zweiten Solltemperaturbereich S₂ um. Im zweiten Solltemperaturbereich S₂ ist lediglich der untere Temperaturschwellwert T₁ um eine Temperaturdifferenz stufenartig nach unten gesetzt. Der obere Temperaturschwellwert T₂ bleibt dagegen konstant.

### BEZUGSZEICHENLISTE

- 1: Kühlraum, Kühlfach
- 3: Kältemittelkreislauf
- 5: Verdichter
- 7: Expansionsventil
- 9: Verdampfer
- 11: Raumsensor
- 13: Verdampfersensor
- 15: Signalleitung
- 17: Eingabemittel
- 19: Signal-Erzeugungseinrichtung
- 21: Bedienelement
- 23: Türöffnungssensor
- 25: Überwachungssensor
- Tᵢₛₜ: Ist-Temperatur
- ΔT₁, ΔT₂: Temperaturdifferenz
- t₀: Zeitpunkt der Erzeugung eines Wareneinbringungssignales S_{W}
- T_{W}: Zeitpunkt der Wareneinbringung in das Kühlfach 1
- S_{W}: Wareneinbringungssignal
- S₁: erster Solltemperaturbereich
- S₂: zweiter Solltemperaturbereich
- Δt, Δt₁, Δt₂: Verdichter-Laufzeiten
- Δt₀: Zeitdauer, in der der zweite Solltemperaturbereich aktiviert ist

## Patentansprüche

1. Kühl- und/oder Gefriergerät mit einer Regeleinrichtung (10) zur Regelung einer Ist-Temperatur (Tᵢₛₜ) in einem Kühlfach (1) zwischen einem oberen und einem unteren Temperatur-Schwellwert (T₁, T₂), wobei bei Vorliegen eines das Einbringen von Kühlgut in das Kühlfach (1) anzeigenden Wareneinbringungssignales (S_{W}) der untere Temperaturschwellwert (T₁) für eine vorbestimmte Zeitdauer (Δt₀) abgesenkt ist, **dadurch gekennzeichnet, dass** der Regeleinrichtung (10) eine Signal-Erzeugungseinrichtung (19) zugeordnet ist, mit der das Wareneinbringungssignal (S_{W}) erzeugbar ist und die einen Überwachungssensor (25) aufweist, der einen Prozeßparameter, etwa einen Kältemittelkreislauf-Parameter, überwacht und bei Überschreiten eines Grenzwertes das Wareneinbringungssignal (S_{W}) erzeugt.

2. Kühl- und/oder Gefriergerät nach Anspruch 1, **dadurch gekennzeichnet, dass** der obere Temperaturschwellwert (T₂) mit Erzeugung des Wareneinbringungssignals (S_{W}) unverändert konstant bleibt.

3. Kühl- und/oder Gefriergerät nach Anspruch 1 oder 2, **dadurch gekennzeichnet, dass** die Signal-Erzeugungseinrichtung (19) ein manuell betätigbares Bedienelement (21) aufweist, mit dessen Betätigung das Wareneinbringungssignal (S_{W}) erzeugbar ist.

4. Kühl- und/oder Gefriergerät nach einem der Ansprüche 1 bis 3, **dadurch gekennzeichnet, dass** die Signal-Erzeugungseinrichtung (19) einen Türöffnungssensor (23) aufweist, mittels dem beim Öffnen einer Gerätetür das Wareneinbringungssignal (S_{W}) erzeugbar ist.

5. Kühl- und/oder Gefriergerät nach einem der vorhergehenden Ansprüche, **dadurch gekennzeichnet, dass** der Regeleinrichtung (10) als Stellglied ein Verdichter (5) eines Kältemittelkreislaufes zugeordnet ist, und dass insbesondere die Steuereinrichtung (10) den Verdichter (5) einschaltet, wenn die Ist-Temperatur (Tᵢₛₜ) den oberen Temperaturschwellwert (T₂) überschreitet, oder ausschaltet, wenn die Ist-Temperatur (Tᵢₛₜ) den unteren Temperturschwellwert (T₁) unterschreitet.

6. Kühl- und/oder Gefriergerät nach einem der Ansprüche 1 bis 5, **dadurch gekennzeichnet, dass** der Überwachungssensor (25) als Prozeßparameter Verdichter-Laufzeitintervalle (Δt₁, Δt₂) überwacht, und die Signal-Erzeugungseinrichtung (19) bei Überschreiten einer vorgegebenen Grenzintervalllänge das Wareneinbringungssignal (S_{W}) erzeugt.

7. Kühl- und/oder Gefriergerät nach einem der vorhergehenden Ansprüche, **dadurch gekennzeichnet, dass** der untere Temperaturschwellwert (T₁) des Solltemperaturbereichs (S₁) einer benutzerseitig einstellbaren Temperatur entspricht.

8. Kühl- und/oder Gefriergerät nach einem der vorhergehenden Ansprüche, **dadurch gekennzeichnet, dass** der Regeleinrichtung (10) ein Kühlfachsensor (11) zugeordnet ist, der die Kühlfachtemperatur als Ist-Temperatur (Tᵢₛₜ) erfasst.

9. Kühl- und/oder Gefriergerät nach Anspruch 8, **dadurch gekennzeichnet, dass** der Regeleinrichtung (10) ein Verdampfersensor (13) zugeordnet ist, der die Temperatur eines in den Kältemittelkreislauf geschalteten Verdampfers erfasst, und dass insbesondere die Regeleinrichtung (10) auf der Grundlage der erfassten Kühlfach- und Verdampfertemperatur den Verdichter (5) ansteuert.

10. Kühl- und/oder Gefriergerät nach Anspruch 9, **dadurch gekennzeichnet, dass** die Regeleinrichtung (10) das Einschalten des Verdichters (5) erst ab einer vorgegebenen Verdampfertemperatur freigibt, bei der ein Abtauen des Verdampfers (9) gewährleistet ist.

11. Kühl- und/oder Gefriergerät nach einem der vorhergehenden Ansprüche, **dadurch gekennzeichnet, dass** der untere Temperaturschwellwert (T₁) vor Erzeugung des Wareneinbringungssignales (S_{W}) bei etwa 4°C, und nach Erzeugung des Wareneinbringungssignales (S_{W}) bei etwa 1 bis 2°C liegt.

## Claims

1. Cooler and/or freezer with a control device (10) for controlling an actual temperature (Tact) in a cooling compartment (1) between an upper and a lower temperature threshold value (T₁, T₂), wherein upon existence of a goods placement signal (S_{W}) indicating placement of goods in the cooling compartment (1), the lower temperature threshold (T₁) is lowered for a pre-determined period of time (Δt₀), **characterised in that** the control device (10) is assigned a signal-generation device (19) with which the goods placement signal (S_{W}) is able to be generated and which features a monitoring sensor (25) which monitors a process parameter such as a coolant circuit parameter and generates the goods placement signal (S_{W}) if a threshold value is exceeded.

2. Cooler and/or freezer according to claim 1, **characterised in that** the upper temperature threshold value (T₂) remains constant with the generation of the goods placement signal (Sw).

3. Cooler and/or freezer according to claim 1 or 2, **characterised in that** the signal-generation device (19) features a manually-actuatable control (21), with the actuation of which the goods placement signal (S_{W}) is able to be generated.

4. Cooler and/or freezer according to one of claims 1 to 3, **characterised in that** the signal-generation device (19) features a door-opening sensor (23) by means of which, upon opening a device door, the goods placement signal (S_{W}) is able to be generated.

5. Cooler and/or freezer according to one of the preceding claims, **characterised in that** the control device (10) is assigned a compressor (5) of a coolant circuit as a control element and that the control device (10) especially switches on the compressor (5) if the actual temperature (Tact) exceeds the upper temperature threshold (T₂) or switches it off if the actual temperature (Tact) falls below the lower temperature threshold (T₁).

6. Cooler and/or freezer according to one of claims 1 to 5, **characterised in that** the monitoring sensor (25) monitors as its process parameter compressor run time intervals (Δt₁, Δt₂), and the signal-generation device (19) generates the goods placement signal (S_{W}) if a pre-determined threshold interval length is exceeded.

7. Cooler and/or freezer according to one of the preceding claims, **characterised in that** the lower temperature threshold value (T₁) of the setpoint temperature range (S₁) corresponds to a temperature able to be set by a user.

8. Cooler and/or freezer according to one of the preceding claims, **characterised in that** the control device (10) is assigned a cooling compartment sensor (11) which detects the cooling compartment temperature is the actual temperature (T_{act}).

9. Cooler and/or freezer according to claim 8, **characterised in that** the control device (10) is assigned an evaporator sensor (13) which detects the temperature of an evaporator connected into the coolant circuit and that the control device (10) especially controls the compressor (5) on the basis of the detected cooling compartment and evaporator temperature.

10. Cooler and/or freezer according to claim 9, **characterized in that** the control device (10) only enables the switching on of the compressor (5) as from a pre-determined evaporator temperature at which the defrosting of the evaporator (9) is guaranteed.

11. Cooler and/or freezer according to one of the preceding claims, **characterized in that** the lower temperature threshold (T₁) lies at around 4°C before the generation of the goods placement signal (S_{W}) and at around 1 to 2° after the generation of the goods placement signal (S_{W}).

## Revendications

1. Appareil de réfrigération et/ou de congélation muni d'un dispositif de régulation (10) destiné au réglage d'une température réelle (Tᵢₛₜ) dans un compartiment de réfrigération (1) entre une valeur seuil de température supérieure et inférieure (T₁, T₂), la valeur seuil de température inférieure (T₁) étant abaissée pour une durée prédéterminée (Δt₀) en cas de présence d'un signal d'apport de marchandise (S_{W}) indiquant l'apport de marchandise à réfrigérer dans le compartiment de réfrigération (1), **caractérisé en ce qu'**un dispositif générateur de signal (19) est attribué au dispositif de régulation (10), au moyen duquel dispositif générateur de signal le signal d'apport de marchandise (S_{W}) peut être généré et lequel présente un capteur de contrôle (25) qui contrôle un paramètre de processus, par exemple un paramètre de circuit de réfrigérant, et génère le signal d'apport de marchandise (S_{W}) lorsqu'une valeur limite est dépassée.

2. Appareil de réfrigération et/ou de congélation selon la revendication 1, **caractérisé en ce que** la valeur seuil de température supérieure (T₂) reste invariablement constante lorsque le signal d'apport de marchandise (S_{W}) est généré.

3. Appareil de réfrigération et/ou de congélation selon la revendication 1 ou 2, **caractérisé en ce que** le dispositif générateur de signal (19) présente un élément de commande (21) actionnable manuellement, à l'aide de la commande duquel le signal d'apport de marchandise (S_{W}) peut être généré.

4. Appareil de réfrigération et/ou de congélation selon l'une quelconque des revendications 1 à 3, **caractérisé en ce que** le dispositif générateur de signal (19) présente un capteur d'ouverture de porte (23), au moyen duquel le signal d'apport de marchandise (S_{W}) peut être généré lors de l'ouverture d'une porte d'appareil.

5. Appareil de réfrigération et/ou de congélation selon l'une quelconque des revendications précédentes, **caractérisé en ce qu'**un compresseur (5) d'un circuit de réfrigérant est attribué au dispositif de régulation (10) en tant qu'actionneur, et **en ce que** notamment le dispositif de commande (10) met en marche le compresseur (5) lorsque la température réelle (Tᵢₛₜ) dépasse la valeur seuil de température supérieure (T₂), ou le met hors fonction lorsque la température réelle (Tᵢₛₜ) dépasse vers le bas la valeur seuil de température inférieure (T₁).

6. Appareil de réfrigération et/ou de congélation selon l'une quelconque des revendications 1 à 5, **caractérisé en ce que** le capteur de contrôle (25) contrôle des intervalles de temps de marche du compresseur (Δt₁, Δt₂) en tant que paramètres de processus et **en ce que** le dispositif générateur de signal (19) génère le signal d'apport de marchandise (S_{W}) lorsqu'une longueur d'intervalle limite prédéfinie est dépassée.

7. Appareil de réfrigération et/ou de congélation selon l'une quelconque des revendications précédentes, **caractérisé en ce que** la valeur seuil de température inférieure (T₁) de la plage de température théorique (S₁) correspond à une température réglable côté utilisateur.

8. Appareil de réfrigération et/ou de congélation selon l'une quelconque des revendications précédentes, **caractérisé en ce qu'**un capteur de compartiment de réfrigération (11) est attribué au dispositif de régulation (10), lequel capteur enregistre la température du compartiment de réfrigération en tant que température réelle (Tᵢₛₜ).

9. Appareil de réfrigération et/ou de congélation selon la revendication 8, **caractérisé en ce qu'**un capteur d'évaporateur (13) est attribué au dispositif de régulation (10), lequel capteur enregistre la température d'un évaporateur monté dans le circuit de réfrigérant, et **en ce que** notamment le dispositif de régulation (10) commande le compresseur (5) sur la base de la température enregistrée du compartiment de réfrigération et du compresseur (5).

10. Appareil de réfrigération et/ou de congélation selon la revendication 9, **caractérisé en ce que** le dispositif de régulation (10) libère la mise en marche du compresseur (5) seulement à partir d'une température prédéfinie de l'évaporateur, à laquelle un dégivrage du compresseur (9) est garanti.

11. Appareil de réfrigération et/ou de congélation selon l'une quelconque des revendications précédentes, **caractérisé en ce que** la valeur seuil de température inférieure (T₁) est d'environ 4°C avant la génération du signal d'apport de marchandise (S_{W}) et **en ce qu'**elle est d'environ 1 à 2°C après la génération du signal d'apport de marchandise (S_{W}).
